# EUROPEAN PATENT APPLICATION

(11) **EP 3 594 179 A1**
(43) Date of publication of application: **15.01.2020**
(21) Application number: 18182705.6
(22) Date of filing: 10.07.2018
(51) Int. Cl.: C01B 32/168, H01M 4/62, H01M 4/66

(54) **3D-SCAFFOLD COMPRISING A SUBSTRATE AND CARBON NANOTUBES**

(71) Applicant: Nederlandse Organisatie voor toegepast- natuurwetenschappelijk onderzoek TNO, 2595 DA 's-Gravenhage (NL)
(72) Inventor: van den Ham, Evert Jonathan, 2595 DA s'- Gravenhage (NL); Haverkate, Lucas Augustinus, 2595 DA s'-Gravenhage (NL); Hermes, Dorothee Christine, 2595 DA s'-Gravenhage (NL); Tulodziecki, Michal, 2595 DA s'-Gravenhage (NL); Unnikrishnan, Sandeep, 2595 DA s'-Gravenhage (NL)
(74) Representative: V.O.

(57) **Abstract**

A substrate comprises carbon nanotubes, oriented largely parallel in a direction away from the substrate. In a plane along a surface of said substrate carbon nanotubes are formed in first cells of a connected structure of carbon nanotubes. Said first cells formed within a second structure of second cells, the carbon nanotubes are thereby patterned in a structure of first cells, nested in a structure of second cells. The first cells comprise at least one opening, without carbon nanotubes, to provide access to the surface of the substrate. Second cells are separated from each other by a trench to prevent carbon nanotubes of a second cell from contacting carbon nanotubes of another second cell across a first gap formed by said trench. The trench provides access to the substrate.

## Description

### FIELD OF THE INVENTION

The present invention relates to substrates comprising largely vertically oriented carbon nanotubes that are, in a plane along the substrate, formed as a connected structure. Such a structure is e.g. known for use as an electrode.

### BACKGROUND TO THE INVENTION

For example, WO2017011052A2 discloses vertically aligned carbon nanotubes in a connected structure covering a large area of a substrate. Lithium is deposited onto these vertically aligned carbon nanotubes to form an electrode. The deposition of lithium results in an agglomeration of these nanotubes and an associated loss of orientation, resulting in bending, curling, cracking and falling over of tubes. It is an aspect of the present invention to provide a connected structure of carbon nanotubes absent of such loss of orientation.

US20170214083A1 also describes the use of a connected structure of vertically aligned carbon nanotubes. The described connected structures of carbon nanotubes are used as a scaffold in the assembly of interlaced or interleaved finger-shaped electrodes for use in 3D-batteries. The electrodes are described to have a length of approximately 1.44 cm and a width in a range from typically less than 100 µm, down to preferably 30 µm. Finger-shaped structures of nanotubes are grown using a physical vapor deposition (PVD) process from a substrate provided with a pattern of suitable catalyst. Subsequently, suitable electrode materials are deposited onto the carbon nanotube structures. The document specifies this cannot be done on a single substrate, since each electrode material requires a different deposition process. Therefore, each electrode is separately cut out of its substrate and processed individually. At a later stage, the anode and cathode must be assembled at a gap, and the gap filled with a suitable electrolyte to form a 3D-battery.

Thin-film battery structures of known type are disclosed e.g. in WO2010032159, the contents of which are included by reference, wherein for example all-solid state compositions are deposited on 3D micro-patterned structures. In this respect, where early battery structures utilize liquid electrolytes, all-solid state compositions utilize electrolytes of a solid state type, which are inherently safer in use. In these structures a large variety of materials are and have been used for the respective electrodes for example as disclosed in US 20110117417. In discharging battery mode, the anode is the "negative electrode" to which the positive current flows, from the cathode, being the "positive electrode". During charge these functions are reversed. Irrespective charging mode, the electrochemical relationship may be characterized by charge exchange between a negative electrode material and a positive electrode material, the negative electrode material having a workfunction or redox potential that is lower than the workfunction or redox potential of the positive electrode material.

For example, known negative electrode (anode) materials are Lithium metal, Li4Ti6O12 (Titanate); LiC6 (Graphite); Li4.4 Si (Silicon) and Li4.4Ge (Germanium) known positive electrode (cathode) materials are LiCOO2 (LCO), LiCoPO4, (doped) LiMn2O4 (LMO), LiMnPO4, LiFePO4 (LFP), LiFePO4F(LFPF) or LiCO1/3Ni1/3Mn1/3O2 (LCNMO).

Known (solid state) electrolytes might include lithium iodide (LiI), lithium phosphate (Li3PO4) and lithium phosphorus oxynitride (LiPON). In addition, lithium salts, such as LiPF6, LiBF4 or LiClO4 in an organic solvent, such as ethylene carbonate, dimethyl carbonate, diethyl carbonate, propylene carbonate are known to have a typical conductivity of about 10 mS/cm at RT. The electrolyte decomposes on initial charging and forms a solid layer called the solid electrolyte interphase (SEI).

Solid polymer separators may also be included, such polymers like polyethylene oxide (PEO) having transport capacity often due to having a lithium salt like LiTFSI or LiFSI disposed therein as known in the state of the art. In addition, gel polymers include an aprotic solvent like PC, EC or DMC or ionic liquid like Pyr13LiTFSI or Pyr14LiTFSI. The invention is not limited to the specific chemistry of the battery; alternatively sodium materials can be used e.g.: Anode materials comprising Na, Na-Sn, Na2Ti3O7 ; Cathode materials comprising Na2S, TiS2 , Na0.67Ni0.33Mn0.67O2, Na3V2(PO4)3, NaFePO4 and electrolytes comprising Solid: Na3PS4, Na-β/β"-alumina NaSiCON, Na2S-P2S5

In order to maximize power density of 3D-batteries it is, in general terms, desirable to increase interface areas between cathode and anode and/or to reduce ion- and electron-diffusion distances. For US20170214083A1 it is not feasible to further improve these parameters by further minimizing the finger dimensions, nor by providing additional micro structuring on said fingers since US20170214083A1 requires that electrodes must be cut out as well as physically handled. This leads to a limitation that the carbon nanotube scaffold has rather large minimal dimensions; 30 µm appears to be a minimum width for electrodes whereas 25 µm is given as minimal gap distance.

It is an aspect of the present invention to provide a solution for said problems by providing a connected structure of largely vertically oriented carbon nanotubes that provides large surface areas and high aspect ratio elements and enables further processing steps on a single substrate.

### SUMMARY OF THE INVENTION

A substrate comprises carbon nanotubes, oriented largely parallel in a direction away from the substrate. In a plane along a surface of said substrate carbon nanotubes are formed in first cells formed by one or more connected structures of carbon nanotubes. Said first cells are nested within a structure of second cells. The first cells comprise at least one opening, without carbon nanotubes, to provide access to the surface of the substrate. Connected structures between second cells are separated from each other by a trench to prevent carbon nanotubes of a second cell from contacting carbon nanotubes of another second cell across a first gap formed by said trench. The trench provides access to the substrate between connected first structures of carbon nanotubes. Capillary forces are prevented to propagate to neighboring cells. In this way, cracking of the connected structures is prevented

### BRIEF DESCRIPTION OF THE DRAWINGS

The invention will further be elucidated on the basis of exemplary embodiments which are represented in a drawing. The exemplary embodiments are given by way of non-limitative illustration. It is noted that schematic representations of embodiments of the invention that are given by way of nonlimiting example.

In the drawings:
Fig. 1 illustrates a prior art structure displaying uncontrolled agglomeration of vertically aligned carbon nanotubes after contact with a liquid;
Fig. 2 schematically depicts a top-view of a first exemplary embodiment of a connected structure;
Fig. 3 schematically depicts the top-view of a second exemplary embodiment of a connected structure;
Fig. 4 schematically depicts the top-view of a third exemplary embodiment of a connected structure;
Fig. 5 schematically depicts the top-view of a fourth exemplary embodiment of connected structure;
Fig. 6a) and b) depict scanning electron micrographs of a composite material on a substrate;
Fig. 7 a) and b) schematically depicts a top-views of a fifth and sixth exemplary embodiment of a connected structure;
Fig. 8 schematically depicts a top-view of a seventh exemplary embodiment of a connected structure;
Fig. 9 a), b) and c) schematically depicts a connected structure wherein a top layer is provided covering the structures of carbon nanotubes;
Fig. 10 schematically illustrates three stages of a production process of a 3D-battery comprising a structure of carbon nanotubes;
Fig 11 schematically depicts a connected structures onto which layers are provides with vertical and lateral gradients.
Fig. 12 schematically depicts a 3D energy storage system

### DETAILED DESCRIPTION

A structure is provided of carbon nanotubes, wherein said openings within the first cells form one or more channels providing access to said trench separating said second cells, and wherein a second gap formed by said channel separates nanotubes across said channel by a minimum distance. Such a distance may be about 0.5 µm or more, e.g. 10 micrometer or 50 micrometer. By forming one or more channels from openings in the first cells to provide access to said trenches separating said second cells one or more connected network of channels and trenches is formed. These networks may form a perfusion network for process gasses and liquids in the process of manufacturing in a direction along the substrate and provide access to said substrate.

In another aspect, a structure of carbon nanotubes comprises one or more channels providing access to said trench separating said second cells, wherein said channels and/or said trenches have a preferential orientation in a direction along the substrate. This preferential direction may for example be along a direction a substrate is moved during fabrication or processing of the structure of carbon nanotube. In case the substrate is flexible, the preferential direction may also be defined according to a preferred bending direction, to prevent carbon nanotubes separated by said channels and trenches from contacting each other.

Preferably a constant distance is maintained between the terminal ends, i.e. upper ends, away from the substrate, of said carbon nanotubes by providing a structure of carbon nanotubes. To this end, a top layer may be provided to connected structures of carbon nanotubes. A top layer links terminal ends of carbon nanotubes and thus helps in controlled agglomeration or collapse of said carbon nanotubes which effectively increases potential room for providing additional composite layers to the connected structures. Agglomeration or collapse can be described as a densification process of closely packed nanotubes due to capillary interaction by a liquid, when the liquid is extracted (dried) which will be further explained in the remainder. The top layer may be formed from a single material or may comprise multiple materials, forming a composite top layer. Suitable materials include, but are not limited to, oxides, for example aluminum oxide, titanium oxide, zinc oxide, vanadium oxide, indium oxide, or a combination thereof. Depending on process conditions, the presence of a trench or other larger openings, and their dimension and orientation, the top layer may also be deposited on the substrate. Suitable deposition methods include, but are not limited, to sputtering methods. Optionally, the part of the top layer deposited on the substrate, i.e. between the carbon nanotube structures, could be electrically conductive. This electrically conductive layer contributes to providing an electrically conductive connection between substrate and carbon nanotube structures. A suitable thickness of such layer would be 5 µm. In another aspect a structure is provided of carbon nanotubes that is further processed to form a composite material comprising the structure carbon nanotubes and at least a second material. A process for the production of a composite material comprises the steps of; preparing a structure of carbon nanotubes, and deposition of at least a second material using a fluid processing step wherein the fluid processing step comprises one or more of sputtering and chemical vapor deposition (CVD), PVD, and ALD and spatial ALD (sALD) and wet liquiddeposition methods, such as wet chemical deposition methods, wherein the wet chemicalliquid deposition methods comprise methods as hydrothermal growth, chemical bath, sol-gel, chemical solution deposition, combustion synthesis, electrodeposition, and liquid source misted chemical deposition (LSMCD).

Vertically aligned carbon nanotubes on substrates may be obtained using a suitable catalyst with controlled growth process like CVD. The carbon nanotubes may be single-walled or multi-walled carbon nanotubes or a combination thereof. The catalyst may be present as an integral part of the substrate or may be provided separately on a substrate of choice. Substrates may be rigid or flexible.

By growing the carbon nanotubes from a surface a connected structure of carbon nanotubes is formed. It is believed that within a connected structure the presence of nearby carbon nanotubes enables parallel growth of nanotubes. Using a suitable process, carbon nanotubes may be grown with a length of 10, 25 µm, 50 µm, 75 µm, 100 µm, 200 µm, 500 µm or values in between.

Within the connected structure, carbon nanotubes are formed at a small distance from one another, e.g. smaller than 1 micron or even smaller than 100 nm. Structured or patterned structure of vertically aligned carbon nanotubes on a substrate may be obtained starting from a substrate that is uniformly covered with a structure of carbon nanotubes. These structures may be shaped, for example, by removal of part of the carbon nanotubes according to a desired pattern in a separate patterning or lithographic step. Alternatively, connected structures of vertically aligned carbon nanotubes may be obtained by growing the carbon nanotubes to a desired length using a substrate coated with a suitable catalysts that is provided in a desired pattern. In such event the carbon nanotubes will only grown on regions of the substrate where the catalyst is present.

Schematic representations offering a top-view of exemplary embodiments of structures of carbon nanotubes may be interpreted as top-views of said structures of carbon nanotube. Alternatively, these representations may be interpreted as substrates comprising a suitable catalyst layer in the corresponding design.

Within the connected structure the carbon nanotubes are present at a small distance from one another ranging e.g. between 10 nanometer- 1 micrometer. This may leave space between the carbon nanotubes which can be filled with a second material resulting in the formation of a composite material.

Materials may be deposited on carbon nanotube structures using vacuum based deposition methods like CVD, PVD, ALD or sALD. This results in the formation of a coating on and between the carbon nanotubes resulting in impregnation of the connected carbon nanotube structures. The amount of material that is deposited may be controlled by process parameters of the corresponding methods. These process parameter include, for example precursor source, precursor concentration or pressure, substrate temperature, and deposition time. For substrates comprising a structure of carbon nanotubes, wherein the carbon nanotubes are patterned in a structure of cells comprising an opening that provides access to the substrate, material may also be deposited on said substrate at locations of said openings. The homogeneity and /or resulting presence of a conformal coating along the sidewalls of carbon nanotubes structures comprising said openings as well as on the substrate at the bottom of said openings also depends on the accessibility of the substrate and these sidewalls to the corresponding vapors under given process conditions. Accessibility is influenced by the dimension of said openings and the length of the carbon nanotubes; in other words the aspect ratio. Wider openings and/or shorter carbon nanotubes result in improved conformal coverage of a material to be deposited along the sidewalls as well as at the bottom of said openings.

It is an aspect of the present invention to provide structures of connected carbon nanotube comprising holes and/or trenches that can be coated and/or impregnated with an additional material using vapor based deposition methods. Important aspects determining the quality of a coating provided using vapor-based methods include the homogeneity and conformity of a formed coating along the side walls of connected carbon nanotube structures as well as on the substrate openings provide access to. Typically, obtaining good conformal coating is more difficult in structures comprising narrow deep openings, i.e. high aspect ratio holes than in wider openings or elongated openings such as trenches.

It is an aspect of the present invention to improve the quality of coatings added onto provided structures on carbon nanotubes by providing a structure of carbon nanotubes, wherein said openings within the first cells form one or more channels providing access to said trench separating said second cells. By forming one or more channels from openings in the first cells to provide access to said trenches separating said second cells one or more connected networks of channels and trenches is formed. These networks form a perfusion network in a direction along the substrate and provide access to said substrate. This perfusion network improves accessibility throughout the structure of carbon nanotubes as well as to the substrate for of materials to be deposited in vacuum based deposition methods. In order to achieve said desired effect, it was found that said second gap, formed by said channel, separates nanotubes across said channel by a minimum distance of 1 µm.

Deposition of materials in vapor based methods in which vapor perfusion contains an anisotropic component may be improved by proving a perfusion network in the carbon nanotube structure along oriented along a preferred direction. Spatial ALD, or sALD, in which a substrate to be processed is continuously moved under a processes element, is a typical example in which anisotropic perfusion of process gasses is an important aspect. With sALD a drag flow, caused by substrate movement influences perfusion of vapor species. By orienting the channels and trenches provided in a structure of carbon nanotubes on a substrate along a directing along the direction of movement of said substrate, coating quality at the substrate level and along the walls defining openings will be improved.

It is an aspect of the present invention to provide a structure of carbon nanotubes, wherein said one or more openings have a preferential orientation in a direction along the substrate. It was found that for structures comprising oriented channels and trenches straight growth of carbon nanotubes, with a length in excess of 50 µm, was obtainable if the oriented connected channels and trenches are designed to be under 500 µm long and comprise a maximum of 10 trenches that form interconnects between adjacent parallel connected channels and trenches.

Not all materials can be deposited by vacuum based deposition methods. Reasons include for example, limited precursor availability, diffusion restrictions or a lack of precursor stability. In addition, multi-material compounds such as many layered oxide structure structures (such as LiCoO2, LiMn1/3Ni1/3Co1/3O2 which may typically be used in Li-ion batteries) pose a major challenge, especially from a cost perspective.

Therefore, solution processing or a combination of vapor and solution processing of vertically aligned carbon nanotubes is of great interest, for example for the production 3D-thin film all-solid-state Li-ion batteries.

The presence of liquids in combination with connected structures of vertically aligned carbon nanotubes comprising openings, results in the occurrence of large capillary forces. Under the influence of capillary forces, high aspect ratio nanostructures, including structures comprising carbon nanotubes, are known to agglomerate, bend and/or deform as a result of these strong capillary forces. More specifically, in an effort to reduce the strong capillary forces acting on the nanostructures, the structures bend at the cost of an increase in elastic bending energy. Hence, this phenomenon is referred to as 'elastocapillary' action.

Both WO2017011052A2 and US20170214083A1 teach the use of substrates covered over large areas with vertically aligned carbon nanotubes. After deposition of an additional material on to the carbon nanotubes, the carbon nanotubes agglomerate in an uncontrolled way resulting in bending, curling, cracking and falling over of tubes.

Uncontrolled agglomeration of vertically aligned carbon nanotube structures on a substrate may be prevented by stabilizing the structures of nanotubes by connecting the terminal ends of said tubes at a fixed distance from one another. This effect may, for example, be achieved by addition of a top layer onto a structure of vertically aligned carbon nanotubes on a substrate. This layer may, for example, be deposited as a film of an additional material located on top of the structure of nanotubes. Suitable deposition methods include, but are not limited, to sputtering methods. Suitable materials include, but are not limited to, oxides, for example aluminum oxide.

It is an aspect of the present invention to stabilize structures of largely vertically oriented carbon nanotubes by further providing the structures with a top layer connecting the terminal ends of said carbon nanotubes in order to maintain a constant distance between the terminal ends of said carbon nanotubes.

On surfaces provided with nanostructures of suitable length in suitable patterns, agglomeration can be controlled and a hierarchical assembly of structures can be achieved. US9221684 and US20120126449A1 describe methods for the shaping of nanostructure arrays using controlled agglomeration processes. Said documents present design rules for a broad range of attainable architectures on surfaces including: pillars, tubes, as well as sheets, all in a number of upright, bended, twisted or folded variations.

Upon controlled agglomeration of the carbon nanotubes, present in the connected structure, individual carbon nanotubes may agglomerate and form dense solid bundles. This densification results in a lateral reduction in size of the loose carbon nanotube structures. Thick walls are reduced to thinner more dense walls of carbon nanotubes. Densification of structures of carbon nanotube provided with openings results in an increased dimension of said openings. Trenches and gaps widen as a result of controlled agglomeration. Free standing pillar-shaped structures of carbon nanotubes densify into free standing pillar-shaped structures with reduced diameter.

Controlled agglomeration of carbon nanotubes by a liquid process can be used to generate large aspect ratio carbon nanotube structures with lateral dimensions beyond minimal lateral dimensions attainable by conventional lithographic methods.

It is an aspect of the present invention to provide substrates comprising structures of largely vertically oriented carbon nanotubes that are designed to form of large aspect ratio bundles of carbon nanotubes using controlled agglomeration and to avoid undesired collapse, bending, curling, cracking or other unwanted loss of structure resulting from contact with liquids.

It is a further aspect of the present invention to increase the aspect ratio of structures of largely vertically oriented carbon nanotubes by controlled agglomeration.

Without the desire of being bound to any theory, it is believed that uncontrolled agglomeration of carbon nanotubes is the result of lateral stress within the connected structure of carbon nanotubes. For example, in case large structures of carbon nanotubes are exposed to a liquids, capillary forces during drying lead to the agglomeration and bundling of carbon nanotubes within the structure. This results in densification and for large structures this may lead to random formation of cracks and thus to poor long-range order.

An effect of providing trenches, separating structures of carbon nanotubes from opposing structures is that lateral forces within a structure are limited and forces are prevented to propagate to neighboring cells. In an embodiment according to the invention structures are provided with trenches to provide controlled agglomeration as a result of contact with liquids and to prevent random cracking. Also carbon nanotubes from structures across the trench are prevented from contacting each other.

By inducing agglomeration by contact with fluids that are mixtures or solutions comprising a suitable precursor, bundles of carbon nanotubes can be prepared that are impregnated with a desired material. Suitable fluid processing methods in which a layer may be deposited onto a scaffold include, but are not limited to: sputtering, CVD, ALD, spatial ALD and wet deposition methods, such as wet chemical deposition methods, wherein the wet chemical deposition methods comprise methods as hydrothermal growth, chemical bath, sol-gel, chemical solution deposition, combustion synthesis, electrodeposition, and liquid source misted chemical deposition (LSMCD).liquid

It is an aspect of the present to provide a patterned nested structure of carbon nanotubes on a surface with in which the patterning enables controlled agglomeration or agglomeration combined with impregnation.

Controlled agglomeration of carbon nanotubes structures may be performed using pure liquids. Controlled agglomeration may be combined with impregnation by using suitable mixtures of solutions comprising a suitable precursor. Controlled agglomeration may also be preceded by a vacuum based impregnation step. A vacuum based deposition step may also follow after a controlled agglomeration step.

It is a further aspect of the present invention to provide a patterned nested structure of carbon nanotubes on a surface which, after densification and impregnation, is suitable for further processing steps including, but not limited to, gas phase functionalization processes as PVD, CVD, ALD and spatial ALD.

By impregnation using vapor-based processing methods or by combined impregnation and densification using wet liquid methods a composite material is formed. Repeated deposition of additional material onto these composites may lead to the formation of multi-layered composite materials.

It is a further aspect of the present invention that provided carbon nanotube structures are used as scaffold for the production of composite materials/ These composite materials comprise the carbon nanotube structure and least one additional material. Additional materials may be added by liquid deposition methods, vapor based deposition methods or using combinations of processes. Material may also be deposited on carbon nanotube structures repeatedly, resulting in the formation of multi-layered structures on substrates. In case the carbon nanotube structures are provided with a suitable pattern high aspect ratio structures can be formed using controlled agglomeration. Subsequent deposition of additional layers onto these high aspect ratio carbon nanotube structures, layered structures are formed with an orientation largely perpendicular to the substrate.

In conventional 2D-batteries, two suitable electrode materials, separated by an electrolyte material, are oriented parallel to a substrate. In order to increase the energy storage capacity of such layered 2D-batteries, the thickness of the electrode layers may be increased. Increasing the thickness of the electrode layers results in an increase of electron- and ion-diffusion distances. This results in an increased internal resistance of the battery and is accompanied by poor power density of the battery. By simultaneously increasing the volume and interface area of electrode materials within a battery, while maintaining a short distance between the electrodes, both power and energy density of a battery can be increased.

It is a further aspect of the present invention that the ability to form multi layered structures with a largely perpendicular orientation to a substrate is especially beneficial for energy applications like 3D-batteries and super capacitors.

In energy storage systems volume expansion and shrinkage of electrode materials during operation under discharge and/or charging conditions is a well recognized problem. Expansion and/or shrinkage of electrode materials may lead to formation of cracks and/or other damage to the system, leading to performance degradation. Damage to a system may progressively increase upon repeated charging and discharging cycles, resulting in reduced performance over time. For 3D battery applications these issues are especially relevant.

In an embodiment according to the invention a 3D energy storage system is formed comprising the scaffold structure according to the invention. The scaffold structure provides large aspect ratio structures onto which suitable layers of electrode material and electrolyte are deposited. Layers may be deposited using fluid deposition processes such as the aforementioned vacuum deposition methods and wet chemical deposition methods. Good control over properties of deposited layers such as layer thickness, conformity, and homogeneity is desired. To allow for this control, good access to the large aspect ratio carbon nanotube structures during the deposition process is desired, such that material to be deposited is not only deposited on top of said structures, but material may also be deposited along the side walls of the large aspect ratio structures. The scaffold structure according to the invention provides such access by providing a structure wherein carbon nanotubes are formed in a structure of first cells, nested in a structure of second cells, wherein the first cells comprise at least one opening, without carbon nanotubes, to provide access to the surface of the substrate, and wherein second cells are separated from each other by a trench to prevent carbon nanotubes of a second cell from contacting a carbon nanotube of another second cell across a first gap formed by said trench. By providing suitable openings in cells and by separating cells in the scaffold structure across a gap, a space between adjacent large aspect ratio structures is formed which allows for the desired access to access to the large aspect ratio carbon nanotube structures during subsequent fluid deposition steps.

Layers deposited onto the scaffold may also partly impregnate space between carbon nanotubes within a structure. By only partly filling the space between the carbon nanotubes within a structure a porous structure may remain.. Leaving porous regions within the carbon nanotube structure reduces potential damage to an energy storage system resulting from volume changes within the electrode material. Optionally, impregnation may result in the formation of a porosity gradient within the carbon nanotube structure in a direction along the carbon nanotubes. Porosities up to 90% have been achieved, for example with ALD, while still getting a layer thickness in excess of 50 nm

Deposited layers may be provided comprising a gradual and/or step-wise compositional gradient in a direction along the substrate. Alternatively, or additionally, the deposited layers may comprise a compositional gradient in a direction away from the substrate. In this way electrode material comprising large volume changes during operation may desirably be deposited at locations with higher porosity, for example near inner regions of a carbon nanotube structure. Also, electrode material with low volume expansion may, for example, be deposited preferentially near the outer regions of a carbon nanotube structure.

### DETAILED DESCRIPTION OF FIGURES

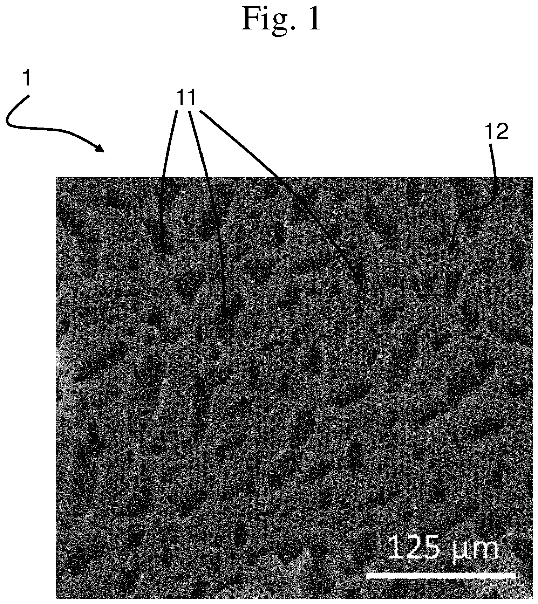

Fig. 1 illustrates a prior art structure displaying uncontrolled agglomeration and loss of orientation for a connected structure of vertically aligned carbon nanotubes arranged in a continuous array of first cells comprising an opening to the substrate after contact with a liquid. A scanning electron micrograph is depicted illustrating uncontrolled agglomeration 1. In this exemplary case, a substrate has been provided with a structure of vertically aligned carbon nanotubes comprising a multitude of holes arranged in a regular hexagonal pattern. The vertically aligned carbon nanotubes surrounding said openings make up a first cell and in absence of second cells, separated by trenches, these first cells form a structure of connected carbon nanotubes which covers a large area of the substrate. Exposing this structure to a liquid results in agglomeration of the carbon nanotubes. The nanotubes form bundles and densification occurs. Without being bound to any theory it is believed that this agglomeration leads to the formation of lateral stress within the connected structure of carbon nanotubes which, in this specific case, leads to the formation of cracks 11, leading to poor long-range order, leaving only small areas with a regular hexagonal array openings 12 in tact.

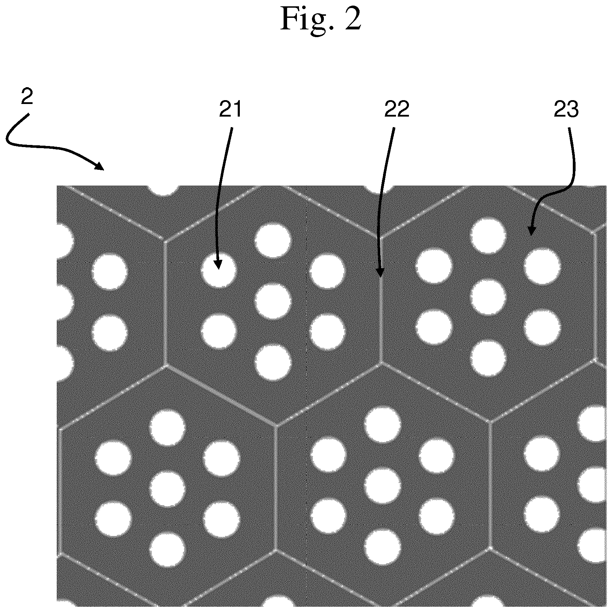

Fig. 2 schematically depicts the top-view of a first exemplary embodiment of a connected structure of vertically aligned carbon nanotubes in a structure of first cells, nested in a structure of second cells. The first cells each, by way of example, comprise 7 openings in a hexagonal arrangement, to provide access to the substrate. Second cells are separated from each other by a trench. It is an aspect of the first exemplary embodiment to avoid uncontrolled collapse of the carbon nanotube structure resulting from contact with liquids. The first exemplary structure comprises a connected structure of vertically aligned carbon nanotubes 23 in which 7 first cells, each comprising a circular opening 21 that provides access to the substrate. In the presented first embodiment, openings 21 are defined by an inner surface of the connected carbon nanotube structure. In the presented first exemplary embodiment the first cells are hexagonally arranged into second cells, resulting in the formation of a honeycomb structure with 2 holes on each side. Honeycomb-shaped structures with a minimum dimension of 15 µm were found to be sufficient to support parallel growth of carbon nanotubes with a length in excess of 100 µm. In these second cells, openings are separated from adjacent openings by a wall of connected carbon nanotubes. These second cells are separated across a first gap from adjacent second cells by a trench 22. The distance between two honeycomb-shaped structures across the first gap is at least 500 nm. For battery applications, the distance is ideally less than about 1 µm in order to maximize energy density. However, for other applications, or for applications on flexible substrates the distance may be larger, for example, 2 µm, 3 µm, 4 µm, 5 µm, or even up to 10 µm. It was experimentally found that range order remains present after agglomeration of carbon nanotubes due to contact with liquid, for honeycomb-shaped structures with a up to 3 holes per side having walls with a dimension ranging from 0.5 µm to 5 µm and having holes with a diameter ranging between 2 µm and 10 µm.

It will be appreciated that although the first exemplary embodiment comprises circular openings, arranged in hexagonal packing forming a honeycomb shape with 2 holes per side, the disclosure thereof is not to be understood as limiting. Other embodiments comprising, for example, different shape openings, different number of openings, arrangements in honeycomb-shaped structures with a different number of openings per side, and/or packing in a non-hexagonal way, for example square, are also envisioned.

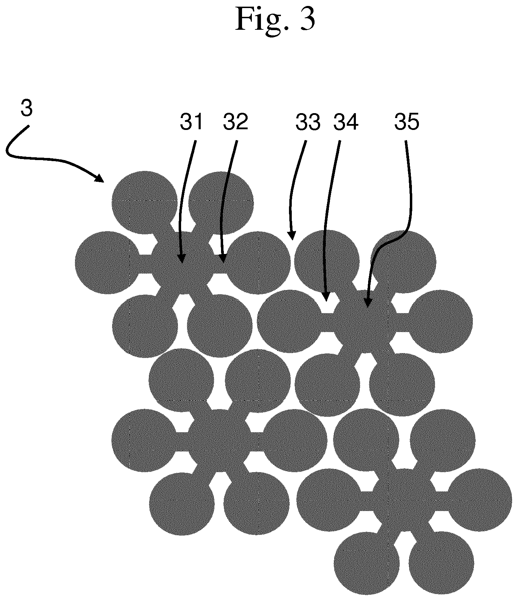

Fig. 3 schematically depicts the top-view of a second exemplary embodiment of a connected structure 3 of vertically aligned carbon nanotubes in a structure of first cells, nested in a structure of second cells, wherein the first cells comprise openings, without carbon nanotubes, to provide access to the surface of the substrate, and wherein second cells are separated from each other by a trench, and wherein said openings within the first cells form channels providing access to said trench separating said second cells, thereby forming a perfusion network for perfusion of process gasses and/or liquids. Fig. 3 shows a top-view of vertically aligned carbon nanotubes 35 in which 7 first cells are connected by interconnects 32 to form a flower-shaped second cell of which the diameter is defined by three interconnected first cells in a row. Second cells are separated from adjacent cells by a first trench with a gap 33. The openings 34 providing access to the substrate, in the presented second exemplary embodiment, are defined by an outer surface of the connected carbon nanotube structure. It is an aspect of the second exemplary embodiment to avoid uncontrolled collapse of the carbon nanotube structure resulting from contact with liquids. Within the second exemplary embodiment first cells may have a diameter ranging between 2 um and 30 µm, interconnects may have a width ranging from 50 nm to 90% of the dimension of the first cell and interconnects may have a length ranging from 50 nm to 100% of the dimension of the first cell. The distance between adjacent second cells may be between 50 nm and 20% of the dimension of the second cell.

It will be appreciated that although the second exemplary embodiment comprises 7 interconnected circular first cells, arranged in flower-shaped second cell, the disclosure thereof is not to be understood as limiting. Other embodiments comprising, for example, different shape first cells, second cells comprising a different number of interconnected first cells, are also envisioned.

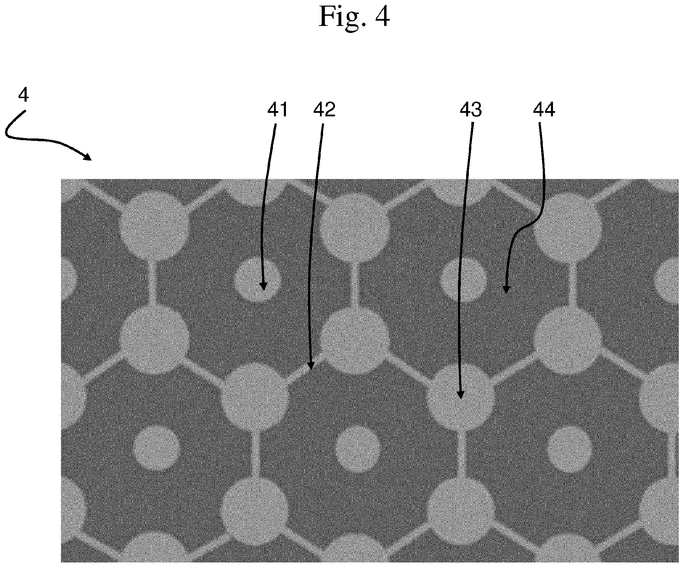

Fig. 4 schematically depicts the top-view of a third exemplary embodiment of a connected structure of vertically aligned carbon nanotubes in a structure of first cells, nested in a structure of second cells, wherein the first cells comprise openings, without carbon nanotubes, to provide access to the surface of the substrate, and wherein second cells are separated from each other by a trench, and wherein additional openings are provided define by an outer surface of connected structures of carbon nanotubes. The third exemplary structure comprises a connected structure of vertically aligned carbon nanotubes 44 comprising a circular opening 41 that provides access to the substrate to form a hollow pillar-shaped second cell. Second cells are separated from adjacent cells by a first trench with a gap 42. The distance between adjacent hollow pillar-shaped structures across the first gap is at least 500 nm . Opening 41, in the presented third exemplary embodiment, is defined by an inner surface of the connected carbon nanotube structure. Opening 43 is defined by outer surfaces of adjacent carbon nanotube structures. It is an aspect of the second exemplary embodiment to avoid uncontrolled collapse of the carbon nanotube structure resulting from contact with liquids. Hollow pillar-shaped structures with a minimum dimension of 15 µm were found to be sufficient to support parallel growth of carbon nanotubes with a length in excess of 100 µm. It will be appreciated that although the third exemplary embodiment comprises pillar shaped carbon nanotubes structures with a circular opening and the outer surface of said pillars is further patterned with additional circular openings, the disclosure thereof is not to be understood as limiting. Other embodiments comprising, for example, pillars comprising no opening or an opening with a different shape, or pillars with a different patterning of the outer surface, or pillars arranged in a non-hexagonal way, are also envisioned.

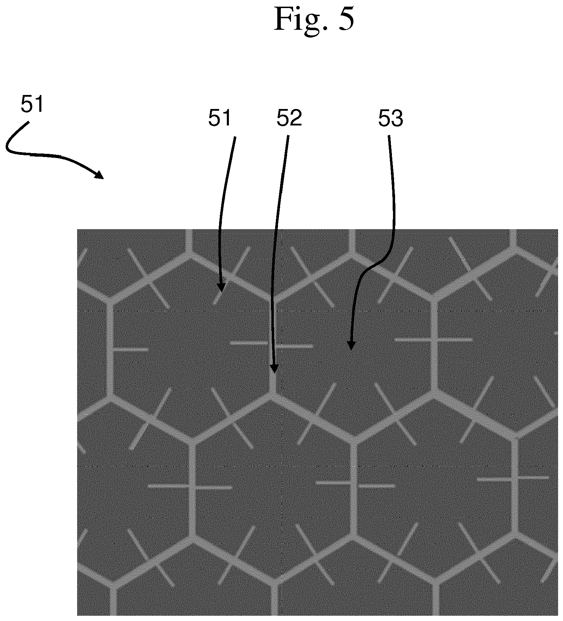

Fig. 5 schematically depicts the top-view of a fourth exemplary embodiment of connected structure 5 of vertically aligned carbon nanotubes in a structure of first cells, nested in a structure of second cells, wherein the first cells comprise openings, without carbon nanotubes, to provide access to the surface of the substrate, and wherein second cells are separated from each other by a trench, and wherein said openings are defined by an outer surface of connected structures of carbon nanotubes. This embodiment may be interpreted as a variation of the third exemplary embodiment 4. The fourth exemplary embodiment structure comprises a connected structure of vertically aligned carbon nanotubes 52 formed into a pillar-shaped cell. Cells are separated from adjacent cells by a first trench with a gap 52. The distance between adjacent pillar-shaped structures across the first gap is at least 500 nm. In the presented fourth exemplary embodiment the outer surface of the pillar is provided with additional openings 51 in the form of short trenches. In accordance with the hollow pillar-shaped connected structures shown in the third exemplary embodiment, a minimum dimension of 15 µm were found to be sufficient to support parallel growth of carbon nanotubes with a length in excess of 100 µm. It will be appreciated that embodiments comprising, for example, pillars with a different shape, or pillars with a different patterning of the outer surface, or pillars arranged in a non-hexagonal way, are also envisioned.

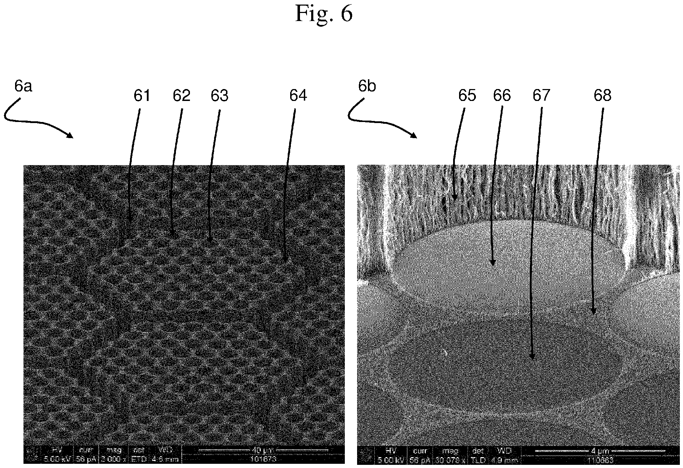

Fig. 6 depicts scanning electron micrographs of a composite material on a substrate comprising a connected structure of carbon nanotubes onto which a thin layer of ZnO is deposited by an atomic layer deposition (ALD) process.

Fig. 6a) and b) depict scanning electron micrographs of a composite material on a substrate. The composite is made by depositing a layer of ZnO using ALD onto a connected structure of vertically aligned carbon nanotubes in a structure of first cells, nested in a structure of second cells, wherein the first cells comprise openings (62, 63), without carbon nanotubes, to provide access to the surface of the substrate, and wherein second cells 64 are separated from each other by a trench 61.

Fig 6a) provides an overview of a structure 6a of carbon nanotubes onto which ZnO is deposited. The honeycomb-shaped structure of carbon nanotubes 64 is similar to the embodiment depicted in Fig. 2, with the modification that in the present structure of carbon nanotubes a hexagonal honeycomb-shaped structure 64 is formed comprising five holes on each side.

On the right an electron micrograph (6b) is depicted, which provides a close-up view of a ZnO-coated structure of carbon nanotubes 65 at a position adjacent a trench. To facilitate recording the region of the carbon nanotube structure near the substrate, part of the structure of carbon nanotubes was removed. The location 68 were the carbon nanotubes were removed remains visible. In the micrograph bright locations 66 on the remaining carbon nanotube structure is indicative of the presence of ZnO along the length of the carbon nanotubes up to the level of the substrate, whereas dark regions 67 indicate the absence of ZnO. In the presented structure, two classes of openings within the honeycomb-shaped structure are discerned; a first type adjacent the trench (62, 66), and a second type in a more central location, at least one row of holes away from the trench (63, 67). ZnO was found to be present on the substrate in areas corresponding to the first type of openings. ZnO was also found to be present at the bottom of the trenches (not shown). In order for ZnO to cover the substrate, its vapor precursor species have to perfuse all the way down the openings. In the present case no conformal ZnO coating was observed at the bottom of openings of the second type. It is believed that perfusion of precursor vapor species through high aspect ratio openings is insufficient to cover the substrate at locations distant from the trench. The observed presence of a thin layer of ZnO at the bottom of openings adjacent the trench, is believed to be facilitated by a partial permeability of the wall separating the hole and the trench.

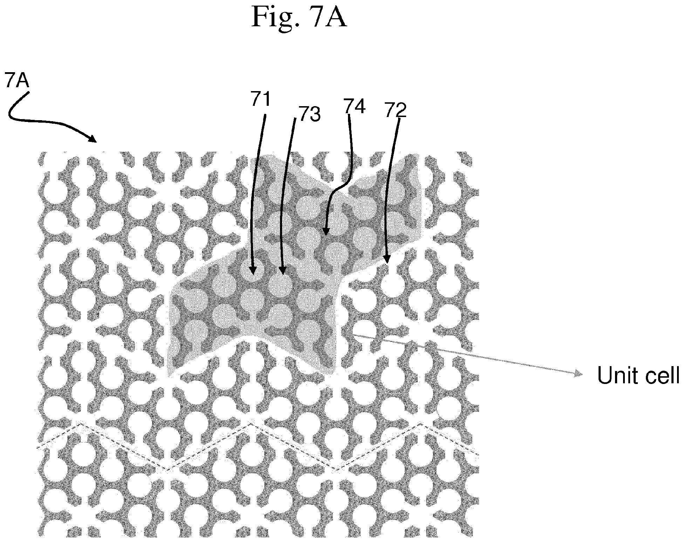

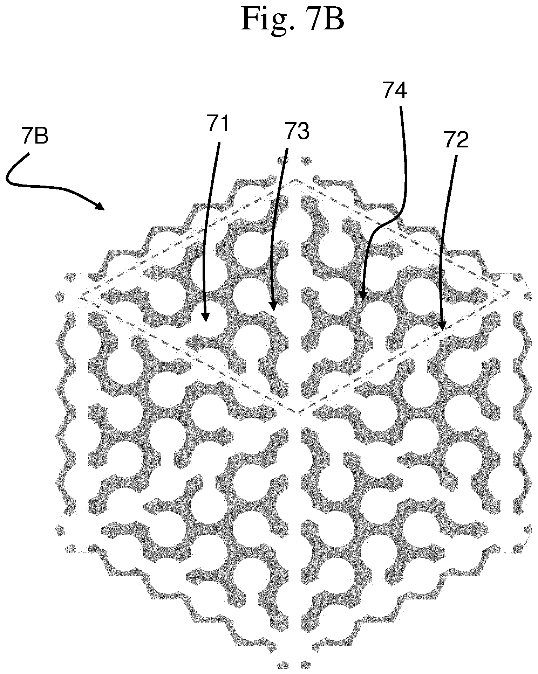

Fig. 7A and 7B schematically depict top-views of fifth and sixth exemplary embodiments 7A and 7B of a connected structure of vertically aligned carbon nanotubes 74 in a structure of first cells, nested in a structure of second cells, wherein the first cells comprise openings 71, without carbon nanotubes, to provide access to the surface of the substrate, and wherein second cells are separated from each other by a trench 72, and wherein said openings within the first cells form one or more channels 73 providing access to said trench separating said second cells. The presented exemplary fifth and sixth embodiments may be interpreted as variations of the honeycomb-shaped structure of the first embodiment. By providing channels connecting openings within a first cell to the trench an open honeycomb-shaped structure is formed. Thereby a network is formed which enables lateral perfusion of gaseous and vapor species between trenches and openings within the structure. This improves access of vapor species to the substrate. Preferably, each opening within the first cell is provided with direct access to the trench. Alternatively access to the trench may be provided by interconnecting a series of holes within a first cell. It was found that, for improved accessibility of vapor species to the substrate, a width of 1 µm or more of said channels is preferred. In addition it was found that, for straight growth of the CNT structures in excess of 100 um, wall thickness of 1 um or more are preferred. It will be appreciated that, besides its application in the present embodiment, the concept of providing a network, that enables lateral perfusion of gaseous and vapor species within the carbon nanotube structure, is not limited to the exemplary embodiments presented in the present application. The concept can also be applied to other structures of carbon nanotubes or structures comprising holes or trenches with different, shapes, dimensions or orientation.

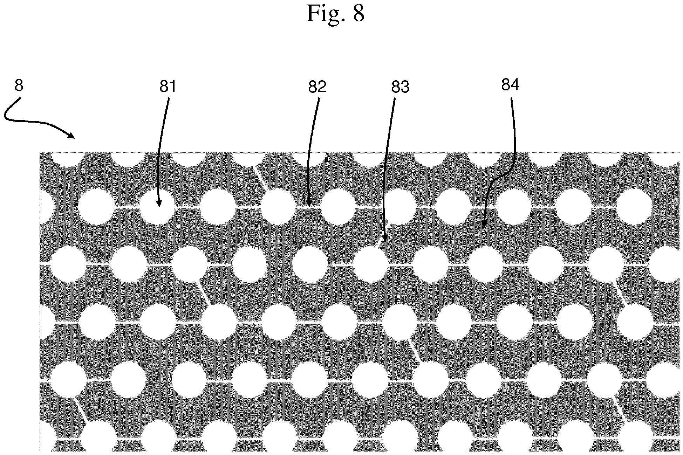

Fig. 8 schematically depicts the top-view of a seventh exemplary embodiment 8 of a connected structure of vertically aligned carbon nanotubes 84 in a structure of first cells, nested in a structure of second cells, wherein the first cells comprise openings 81, without carbon nanotubes, to provide access to the surface of the substrate, and wherein second cells are separated from each other by a trench, and wherein said openings within the first cells form channels 82 along a preferential direction, providing access to said trench separating said second cells, thereby forming a perfusion network, and wherein said openings within the first cells and channels are oriented along a preferential direction. The presented exemplary seventh embodiment may be interpreted as a variation of the open honeycomb-shaped structure of the fifth embodiment. In stead of directly connecting each hole to a trench, holes are connected to each other, forming a multitude of parallel channels in a preferred orientation. Each channel is separated from an adjacent channel by a wall of connected carbon nanotubes. Each channel is connected 83 to adjacent channels. For walls with a thickness under 5 µm, straight growth of carbon nanotubes with a length well above 100 µm, combined with the absence of closure of channels, was found for structures comprising: a maximum channel length of 500 µm, and a maximum of 10 interconnects between adjacent channels.

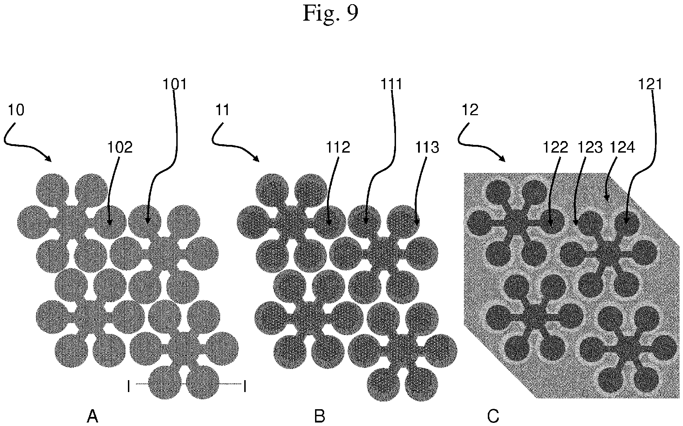

Fig. 9 a)-c) schematically illustrate three stages of a production process of a 3D-battery, wherein an exemplary structure of carbon nanotubes is used as scaffold for the fabrication of a multi layered composite. The process starts in Fig 9a) with the fabrication of a suitable connected structure 101 of carbon nanotubes on a substrate. During this stage carbon nanotubes within a first branch 102 of the structure 101 are present maintaining a small interdistance from each other. This is visualized using a grey color with a patterned fill. The carbon nanotube structure 111 in Fig. 9 b) is exposed to a liquid 113 comprising a suitable precursors for forming a composite electrode material. At this stage the carbon nanotube structure is partially impregnated with electrode materials. This is visualized using a grey color with a less densely patterned fill. Between the first a) and second b) stages, agglomeration caused by capillary forces, results in lateral shrinkage of first the connected structure of carbon nanotubes (101, 112) and a corresponding increased separation between cells. Upon complete drying, in Fig 9 c), an additional layer 123, comprising a solid state electrolyte, is provided onto the impregnated carbon nanotube structures (121, 122). This layer may be deposited using wet liquid methods. Alternatively, partly due to the presence of a perfusion network, said electrolyte layer may also be deposited using vacuum based deposition methods. After deposition of the electrolyte layer a further stage 12 follows, in which a layer 124, comprising a suitable counter electrode material, is added in the remaining openings between the carbon nanotube structures. Alternatively second electrode material 124 may be provided to partly fill the remaining openings between the carbon nanotube structures. The electrolyte material may comprise a solid state electrolyte material and the first and/or second electrode layer may comprise lithium. Alternatively, an energy storage system may also be formed using a liquid electrolyte material.

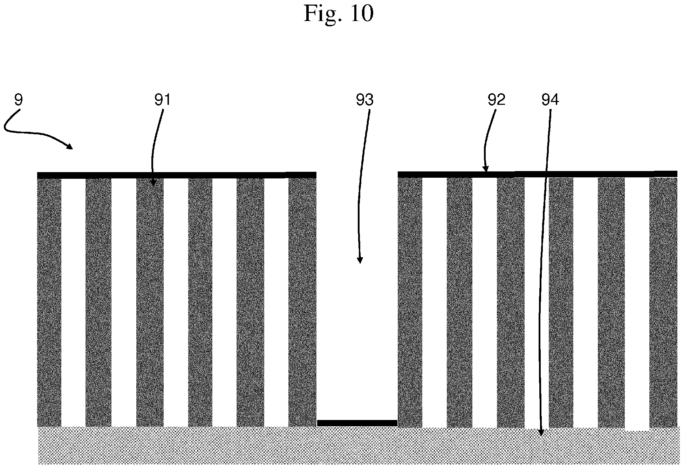

Fig 10 schematically depicts a connected structure 9, e.g. along a line I-I in Figure 9a, of vertically aligned carbon nanotubes 91 on a substrate 94, wherein cells are separated from each other by a trench 93, and wherein a top layer 92 is present connecting the terminal ends of carbon nanotubes structures within a cell. The top layer may, for example, be deposited as a film of an additional material located on top of the structure of nanotubes. By connecting the top ends of carbon nanotubes of a cell, undesired collapse of structures or uncontrolled agglomeration of carbon nanotubes due to contact with liquids, may be avoided. Suitable materials include, but are not limited to, oxides, for example aluminum oxide. Depending on process conditions, the presence of a trench or other larger openings, and their dimension and orientation, the top layer may also be deposited on the substrate. Suitable deposition methods include, but are not limited, to sputtering methods. It will be appreciated that the concept of connecting the top ends of carbon nanotubes within a structure is not limited to the exemplary embodiments presented in the present application.

It will be appreciated that the visualized stages of an exemplary production process of an energy application is not limited to the exemplary process, nor to the used materials and/or depicted carbon nanotube structure. Other production processes, for example, starting from carbon nanotubes structures other than the exemplary structures presented here, or processes using other materials, or process using different deposition processes, and/or processes further comprising steps for the deposition of additional layers or materials are also envisioned.

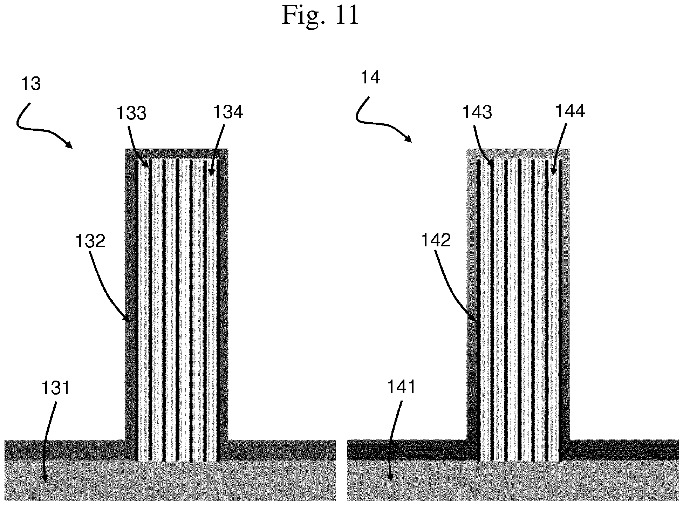

Fig. 11 schematically depicts side-view cross sections of 3D electrodes 13 and 14 comprising connected structures of vertically aligned carbon nanotubes covered with a first electrodematerial, wherein the electrode material partly filling the pores of the carbon nanotubes comprise a density gradient of material compositions e.g. of the type disclosed in WO2010032159 and specified in the background of the specification. In exemplary 3D electrode 13, a connected structure of carbon nanotubes 133 on a substrate 131 is covered with a first electrode material 132. During the deposition process the electrode material 132 partly impregnates the carbon nanotube structure. Typical high-volume expansion electrode materials that may be deposited, using vapor based process are: Sulphur, Silicon,Li2O2, ZnxOy , VxOy , SnxOy , FexOy , FexPyOz, MnxOy, ZnxTiyOz, SnxTiyOz, ZnwSnxTiyOz , VxTiyOz , VxNiyOz , VxMnyOz , VxCuyOz , VxFeyOz , VxCoyOz , VxCryOz , ZnxCryOz , ZnxFeyOz , ZnxMnyOz , ZnxCoyOz , ZnxVyOz , ZnxNiyOz , SnxCryOz , SnxFeyOz , SnxMnyOz , SnxCoyOz , SnxVyOz , SnxNiyOz , InxOy, InxSnyOz ,AlxOy ,ZnxSy , FexSy , TixSy ,ZnxSyOz , FexSyOz , TixSyOz or a combination thereof with w,x,y,z > 0.

These materials may also be lithiated, e.g. using a chemical bath. Hereby partly filling the pores 134 between the carbon nanotubes forming the connected carbon nanotube structure. In exemplary embodiment 13 the material is deposited such that a gradient is formed in a direction along the substrate wherein a more dense filling is obtained in directions away from the center of the carbon nanotube structure. It is found that a layer thickness between 10-100 nm of the material deposited on CNTs favorable for battery performance. This may provide the effect of preventing cracks in the inner parts of the connected structure of carbon nanotubes, affecting the integrity of it. Additionally, lithium metal may plate in the pore structure formed after partly filling the pores with electrode material 132. This leads to a hybrid anode of both lithium metal and electrode material 132. Lithium deposition may also been processed in later stages of the battery fabrication, and eventually in-operando, i.e. during the first formation cycles of a full battery including cathode material. Additionally or alternatively, a continuous layer of electrode material is deposited on the top and sidewall of the carbon nanotube structure and in regions next to these structures, which may be formed from openings and or trenches provided to the connected structure of carbon nanotubes. The thickness of the closing electrode layer is preferably between 50 nm - 1000 nm. The continuous layer may be of different electrode material than the first electrode material partly impregnating into the carbon nanotube structure. For example using materials with low expansion upon lithiation as continuous layer may improve cycling performance of the 3D electrode, whilst the impregnated electrode material has higher expansion providing more capacity. The inner material expands into the tuned porosity, whilst the outer surface of the 3D electrode material keeps minimal expansion/contraction upon cycling.

In exemplary embodiment 14 a similar structure is formed comprising connected structure of carbon nanotubes 143 on a substrate 141 is covered with a first conductive material 142 using a vapor deposition method. In this embodiment material 142 also partly fills the pores 144 between the carbon nanotubes forming the connected carbon nanotube structure. In addition to forming a density gradient in a direction along the substrate a gradient of decreasing conductivity of the material is also formed in a direction away from the substrate, i.e. along the length of the carbon nanotubes. This may provide a 3D current collector structure for subsequent electroplating of an electrode material. For example the conductivity gradient may improve conformality of lithium metal deposition onto the 3D current collector, preventing formation of dendrites on top of the 3D structure when using electroplating with a liquid electrolyte.

It will be appreciated that the depicted exemplary 3D electrode are not indented as limiting examples. Layers of other materials or combinations of materials are also envisioned. Depicted gradients may be formed by variations in one or more of: density, layer thickness, composition or combinations thereof. Gradients may be gradual, step-wise or combinations thereof. Layers may be provided with gradients oriented in directions along and/or away from the substrate.

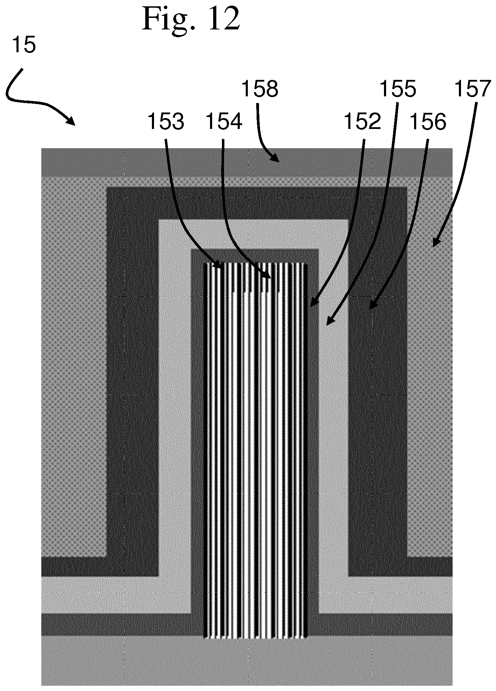

Fig. 12 schematically depicts a 3D energy storage system 15 comprising a 3D electrode and additional layers of electrolyte and electrode material. Exemplary embodiment 15 comprises a 3D electrode, comprising a layer of a first electrode material 152 deposited onto a carbon nanotube structure, whereby the pores 154 between the carbon nanotubes 153 are partly impregnated. Onto the 3D electrode further layers are deposited of solid state electrolyte material 155 and second electrode material 156. Remaining space between covered carbon nanotube structures is filled with a polymer material 157. The exemplary energy storage system is covered with a conductive topstrate 158.

It will be appreciated that the visualized 3D energy storage system is not limited to the exemplary embodiment, nor to the described materials and/or depicted carbon nanotube structure. Other systems, for example, starting from carbon nanotubes structures other than the exemplary structures presented here, or systems comprising other and/or additional materials. Also envisioned are material layers provided with gradients in one or more of thickness, density, composition, and a combination thereof.

## Claims

1. A scaffold structure comprising carbon nanotubes, wherein said nanotubes are oriented largely parallel in a direction away from said substrate, and wherein in a plane along a surface of said substrate carbon nanotubes are formed in first cells formed by one or more connected structures of carbon nanotubes, said first cells are nested in a structure of second cells, wherein the connected structures comprise at least one opening, without carbon nanotubes, to provide access to the surface of the substrate, and wherein connected structures between second cells are separated from each other by a trench to prevent carbon nanotubes of a second cell from contacting a carbon nanotube of another second cell across a first gap formed by said trench, and wherein the trench provides access to the substrate between connected structure of carbon nanotubes.

2. A scaffold structure according to claim 1, wherein said openings within the first cells form one or more channels providing access to said trench separating said second cells, and wherein a second gap formed by said channel separates nanotubes across said channel by a minimum distance of 0.5 µm between the connected structure of carbon nanotubes.

3. A scaffold structure according to claim 1, wherein said nanotubes have a length between 20 and 500 µm.

4. A scaffold structure according to claim 1, wherein said first gap formed by said trench separates nanotubes across said first gap by a distance between 100 nm and 20 µm.

5. A scaffold structure according to claim 1, wherein said connected structure of carbon nanotubes comprise a smallest dimension, in a direction along said substrate, in the range 1 to 50 µm.

6. A scaffold structure according to claim 1, wherein said second cells comprise a largest dimension, in a direction along said substrate, in the range 4 to 500 µm.

7. A scaffold structure according to claim 1, wherein said openings may be defined by one or more of: i) an inner surface of said connected structure, and ii) an outer surface of said connected structure, and iii) an opening defined by outer surfaces of adjacent structures

8. A scaffold structure according to claim 1, wherein said one or more openings have a preferential orientation in a direction along the substrate.

9. A scaffold structure according to claim 1, wherein said substrate may be a rigid or flexible substrate.

10. A scaffold structure according to claim 1, wherein a top layer is present covering the connected structures of carbon nanotubes in order to maintain a constant distance between the terminal ends of said carbon nanotubes.

11. A process for the production of scaffold structure comprising the steps of; providing a substrate,
orienting carbon nanotubes largely parallel in a direction away from said substrate, formed, in a plane along a surface of said substrate, in first cells of a connected structure of carbon nanotubes, said first cells are nested in a structure of second cells formed of second connected structures of carbon nanotubes, providing said first cells with at least one opening, without carbon nanotubes, to provide access to the surface of the substrate, and
separating said second cells from each other by a trench to prevent carbon nanotubes of a second cell from contacting a carbon nanotube of another second cell across a first gap formed by said trench, so that said trench provides access to the substrate.

12. The process according to claim 11, further comprising depositing at least a further material on said scaffold structure using a fluid processing step wherein the fluid processing step comprises one or more of sputtering and CVD and ALD and wet deposition methods, such as wet chemical deposition methods, wherein the wet chemical deposition methods comprise methods as hydrothermal growth, chemical bath, sol-gel, chemical solution deposition, combustion synthesis, electrodeposition, and liquid source misted chemical deposition (LSMCD)

13. An energy storage structure comprising a scaffold structure of carbon nanotubes according to claim 1-10 and at least a composite layer, provided, at least in part, on a surface of said carbon nanotubes, wherein said composite layer comprises a first electrode material, and wherein said composite material is further provided with an additional layer comprising an electrolyte material and a further additional layer comprising an second electrode material, wherein the electrolyte material comprises a solid state electrolyte material, and wherein the first and/or second electrode layer comprises lithium or sodium.

14. An energy storage structure according to claim 13, wherein said composite layer is provided after a controlled collapse of the scaffold structure by a wet deposition method.

15. An energy storage structure according to claim 13 or 14, wherein said composite layer has a gradient in a direction away from the substrate or in a direction along the substrate.
